# EUROPEAN PATENT SPECIFICATION

(11) **EP 2 835 944 B1**
(45) Date of publication and mention of the grant of the patent: **27.09.2017**
(21) Application number: 13179708.6
(22) Date of filing: 08.08.2013
(51) Int. Cl.: H04L 29/06

(54) **A DEVICE HAVING IPV6 FIREWALL FUNCTIONALITY AND METHOD RELATED THERETO**
VORRICHTUNG MIT IPV6-FIREWALL-FUNKTIONALITÄT UND ZUGEHÖRIGES VERFAHREN
DISPOSITIF AYANT UNE FONCTIONNALITÉ DE PARE-FEU IPV6 ET PROCÉDÉ S'Y RAPPORTANT

(43) Date of publication of application: 11.02.2015
(73) Proprietor: Compal Broadband Networks Inc., 114 Taipei City (TW)
(72) Inventor: Huang, Yi-Hsiang, 840 Kaohsiung City (TW)
(74) Representative: Becker Kurig Straus

(56) References cited:
- EP-A1- 2 346 217
- US-A1- 2004 213 237
- US-A1- 2006 159 100
- US-A1- 2009 285 215
- US-A1- 2012 126 976
- US-A1- 2013 091 279

## Description

### Field of the Invention

The invention relates to a device having Internet Protocol version 6 (IPv6) firewall functionality, and more particularly, to a device capable of filtering network packets based on Media Access Control (MAC) addresses and the method related thereto

### Background of the Invention

With the proliferation of networked computer systems or user equipments, criminals and vandals have gone high-tech to ply their trade. Computer systems, particularly those on networks, are routinely infiltrated by malicious software programs, sometimes called "malware", such as viruses, Trojan horse programs, worms, backdoors, zombieware, adware, spyware, keystroke loggers, disk scanners, and so forth, whose purposes range from simple mayhem to information theft to network disruption. These programs arrive via many different routes: the user may download a program believing it to be a useful application, only to discover, when it is too late, that it is a malicious program; an electronic mail attachment appearing to be from a friend might have been sent by a hacker or a hacker's tools; a flaw in the computer's or equipment's operating system or network-enabled application can leave an exploitable "hole" open for a knowledgeable attacker to break in through. Counter-efforts have naturally developed to provide tools to detect, block, neutralize, and/or remove such software, to protect the security and integrity of personal computers and personal data.

In an Internet Protocol version 4 (IPv4) network, a host (e.g., personal computers, user equipments, home electronics, etc.) in local area networks (LAN) is usually configured with a private IPv4 address, and then a connection is built according to the Network Address Translation (NAT) mechanism. Therefore, the network security is relatively controllable for the IPv4 network.

In an IPv6 network, an IPv6 address of a host in LAN is obtained from an IPv6 delegated prefix instead. The IPv6 address of the host in LAN is a global and routable IPv6 address. A home gateway is thus required to have IPv6 firewall functionality for the sake of network security.

In the prior art, a filtering rule may be configured for permitting or denying access of a specific connection by setting a communication protocol, source addresses, source TCP/UDP port numbers, destination addresses, and destination TCP/UDP port numbers in the home gateway. Since an IPv6 address of a host in LAN is obtained via IA_PD, which is dynamically configured by a Dynamic Host Configuration Protocol for IPv6 (DHCPv6) server, the IPv6 address of the same host may not be identical for each connection. Therefore, there is a problem in configuring the filtering rule with proper IPv6 addresses in the home gateway. American patent application US 2009/0285215 A1 describes a system for inspectin DHCP messages comprising an IA_PD Prefix option for an IPv6 prefix and length of the IPv6 prefix, mapping the IPv6 prefix to a MAC address of a device receiving the IPv6 prefix, and populating a table using the mapping. Thus it is necessary to provide a device capable of properly filtering network packets with IPv6 address and ensures the network security.

### Summary of the Invention

The present invention aims at providing a device having an Internet Protocol version 6 (IPv6) firewall functionality to filter network packets based on Media Access Control (MAC) addresses.

This is achieved by a device having an IPv6 firewall functionality according to claim 1. The dependent claims pertain to corresponding further developments and improvements.

As will be seen more clearly from the detailed description as follows, the claimed device having an IPv6 firewall functionality comprises a packet monitoring module for inspecting a packet from a network and updating a MAC address and an IPv6 address of the packet in a MAC-IPv6 address table; a human machine interface for storing a user configuration and updating a filtering rule according to the user configuration and the MAC-IPv6 address table; and a packet filtering module for handling the packet from the network according to the filtering rule.

Another aspect of the invention, as will be seen more clearly from the detailed description as follows, is a method for a system having an IPv6 firewall functionality to filter network packets based on Media Access Control (MAC) addresses which comprises inspecting a packet from a network and updating a MAC address and an IPv6 address of the packet in a MAC-IPv6 address table; storing a user configuration and updating a filtering rule according to the user configuration and the MAC-IPv6 address table; and handling packets transmitting from the network according to the filtering rule.

### Brief Description of the Drawings

FIG. 1 is a schematic diagram of a communication network according to an embodiment of the present invention.
FIG. 2 is a schematic diagram of a device according to an embodiment of the present invention.
FIG. 3 is a schematic diagram of a MAC-IPv6 address table according to an embodiment of the present invention.
FIG. 4 is a flowchart of a process according to an embodiment of the present invention.
FIG. 5 is a flowchart of a process according to an embodiment of the present invention.
FIG. 6 is a flowchart of a process according to an embodiment of the present invention.

### Detailed Description

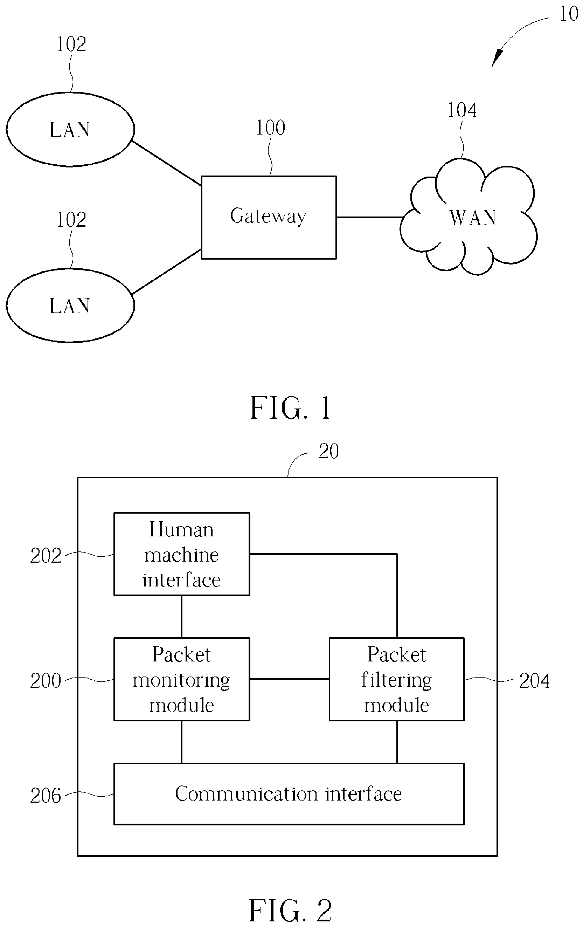

FIG. 1 is a schematic diagram of a communication system 10 according to an embodiment of the present invention. The communication system 10 includes a gateway 100, local area networks (LAN) 102 and wide area networks (WAN) 104. The gateway 100 is connected between LAN 102 and WAN 104 for transporting network packets and providing a firewall functionality. The gateway 100 may be a home gateway, and the hosts in LAN 102 may be digital home appliances such as personal computers, home electronics, security system, and multimedia entertainment equipments, and may be connected to the home gateway through wired/wireless network for communicating with the external network (i.e., WAN 104).

A communication interface of the gateway 100 at WAN 104 terminal may be configured through the Dynamic Host Configuration Protocol for IPv6 (DHCPv6). The IPv6 address of the gateway 100 may be configured via OPTION_IA_NA (Identity Association for Non-temporary Address, RFC3633), and the gateway 100 may obtain a continuous set of IPv6 addresses, updates a filtering rule according to the user configuration and the MAC-IPv6 address table 30. The packet filtering module 204 filters the packet transmitting to WAN 104 from LAN 102 OPTION_IA_PD (Identity Association Prefix Delegation, RFC3633), from a DHCPv6 server for configuring the communication interface at LAN 102 terminal. After the gateway 100 obtains OPTION_IA_PD and configures the address of the communication interface at LAN 102 terminal, the gateway 100 may configure the address of a host in LAN 102 by a stateful or stateless address auto-configuration mechanism defined in IPv6. When the host in LAN 102 obtains the IPv6 address, the host may verify the IPv6 address by exchanging a Neighbor Solicitation (NS) message and a Neighbor Advertisement (NA) message of Internet Control Message Protocol version 6 (ICMPv6) with the gateway 100 in order to guarantee the unique use right of the address, which is called Duplicate Address Detection (DAD). When the host in LAN 102 launches network transmission, the gateway 100 may obtain a Media Access Control (MAC) address of the next transmission node in the communication network 10 by exchanging an NA message and an NA message of ICMPv6.

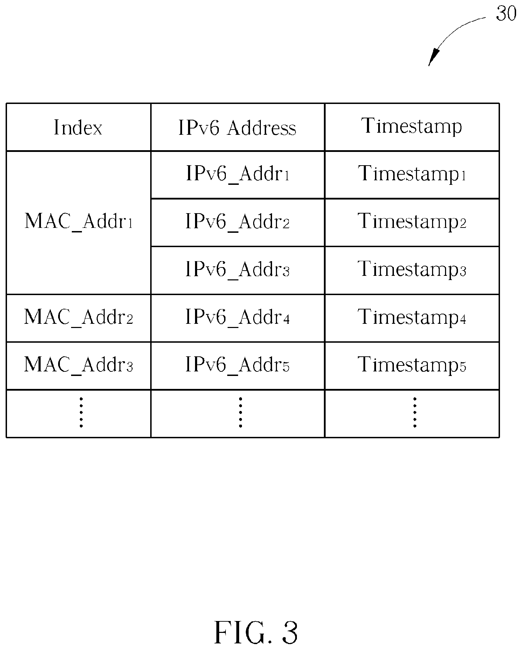

FIG. 2 illustrates a schematic diagram of a device 20 according to an embodiment of the present invention, and FIG. 3 illustrates a schematic diagram of a MAC-IPv6 address table 30 according to an embodiment of the present invention. The device 20 may be the gateway 100 in FIG. 1 having an IPv6 firewall functionality. The device 20 may include a packet monitoring module 200, a human machine interface 202, a packet filtering module 204, and a communication interface 206. The packet monitoring module 200 inspects the NS message and the NA message of ICMPv6 from LAN 102 and updates a MAC-IPv6 address table 30. The human machine interface 202 receives a user configuration, looks up the MAC-IPv6 address table 30, and address table 30 for recording possible IPv6 addresses corresponding to a MAC address, so as to provide an IPv6 firewall functionality based on MAC addresses.

The device 20 is an example of the present invention, and those skilled in the art should readily make modifications and/or alterations accordingly. For example, a MAC address may be mapped to a plurality of IPv6 addresses even though an upper limit for the amount of IPv6 addresses corresponding to the MAC address in the MAC-IPv6 address table 30 may be set. Therefore, when the amount of the IPv6 addresses corresponding to a certain MAC address exceeds the upper limit, the IPv6 address with the farthest timestamp may be removed or replaced by the new IPv6 address with a recent timestamp in order to save the memory. In addition, the MAC-IPv6 address table 30 may use a MAC address as an index so that the device 20 may look up the MAC-IPv6 address table 30 more efficiently.

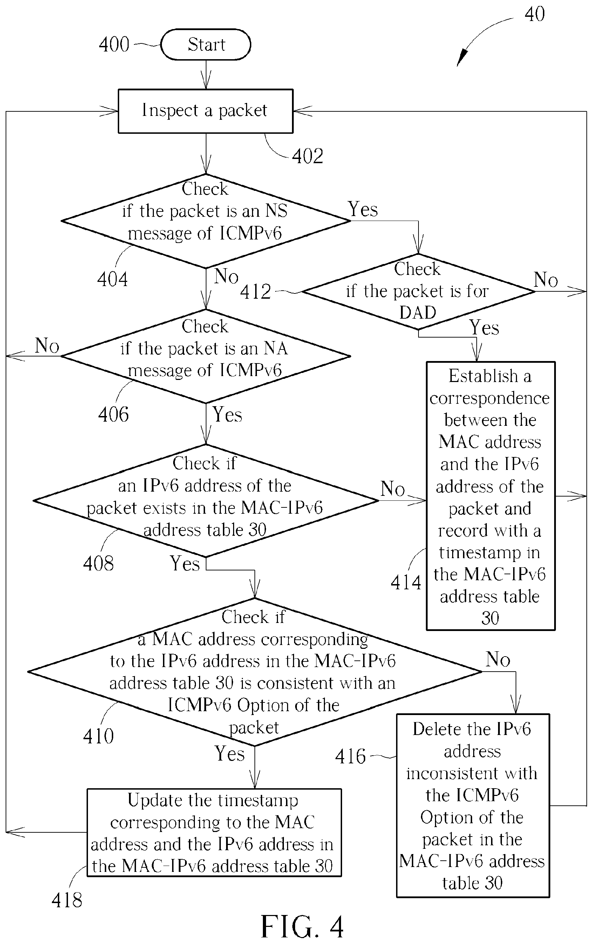

FIG. 4 is a flowchart of a process 40 according to an embodiment of the present invention. The process 40 may be utilized in the gateway 100 of the communication system 10 for inspecting a packet from a network and updating the MAC-IPv6 address table 30. The process 40 may also be implemented by the packet monitoring module 200 of the device 20 and compiled into a program code for executing the following steps:
Step 400: Start.
Step 402: Inspect a packet.
Step 404: Check if the packet is an NS message of ICMPv6. If yes, go to Step 412; otherwise, go to Step 406.
Step 406: Check if the packet is an NA message of ICMPv6. If yes, go to Step 408; otherwise, go to Step 402.
Step 408: Check if an IPv6 address of the packet exists in the MAC-IPv6 address table 30. If yes, go to Step 410; otherwise, go to Step 414.
Step 410: Check if a MAC address corresponding to the IPv6 address in the MAC-IPv6 address table 30 is consistent with an ICMPv6 Option of the packet. If yes, go to Step 418; otherwise, go to Step 416.
Step 412: Check if the packet is for DAD. If yes, go to Step 414; otherwise, go to Step 402.
Step 414: Establish a correspondence between the MAC address and the IPv6 address of the packet and record with a timestamp in the MAC-IPv6 address table 30.
Step 416: Delete the IPv6 address inconsistent with the ICMPv6 Option of the packet in the MAC-IPv6 address table 30.
Step 418: Update the timestamp corresponding to the MAC address and the IPv6 address in the MAC-IPv6 address table 30.

In an embodiment, the device 20 inspects the ICMPv6 packet to update, delete, or establish the timestamp corresponding to the MAC address and the IPv6 address in the MAC-IPv6 address table 30 according to the packet types and the consistency between the packet and the MAC-IPv6 address table 30. For example, if the packet is an NS message of ICMPv6 and is for DAD, the correspondence between the MAC address and the IPv6 address may be established and recorded with the timestamp in the MAC-IPv6 address table 30. However, if the packet is not an NS message of ICMPv6 but is an NA message of ICMPv6, the device 20 may update the correspondence between the MAC address and the IPv6 address in the MAC-IPv6 address table 30 when the IPv6 address already exists in the MAC-IPv6 address table 30 and the MAC address corresponding to the IPv6 address in the MAC-IPv6 address table 30 is consistent with the ICMPv6 Option of the packet. On the contrary, the device 20 may delete the correspondence between the MAC address and the IPv6 address when the MAC address in the MAC-IPv6 address table 30 is inconsistent with the ICMPv6 Option. On the other hand, if the IPv6 address does not exist in the MAC-IPv6 address table 30, the correspondence between the MAC address and the IPv6 address may be established with the timestamp. The device 20 may inspect the next packet if none of the above conditions is satisfied.

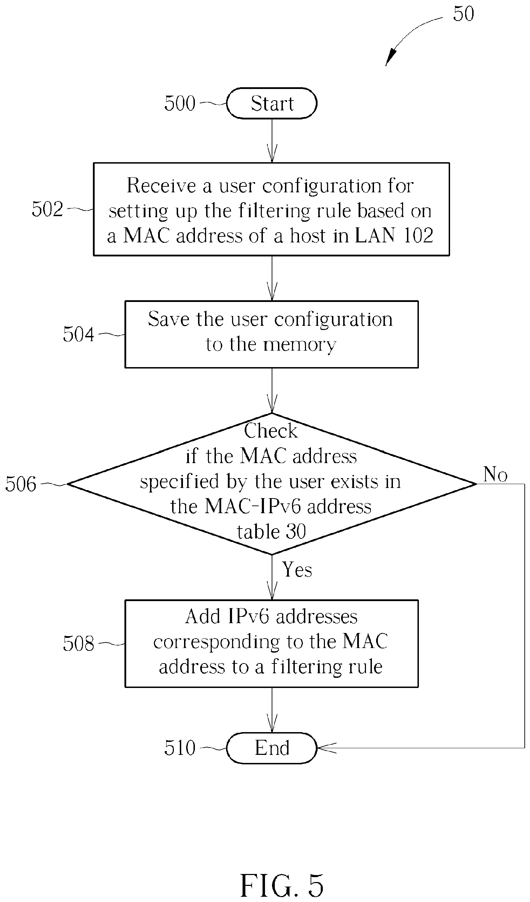

FIG. 5 is a flowchart of a process 50 according to an embodiment of the present invention. The process 50 may be utilized in the gateway 100 of the communication system 10 for storing a user configuration and updating a filtering rule according to the user configuration and the MAC-IPv6 address table 30. The process 50 may also be implemented by the human machine interface 202 of the device 20 and compiled into a program code for executing the following steps:
Step 500: Start.
Step 502: Receive a user configuration for setting up the filtering rule based on a MAC address of a host in LAN 102.
Step 504: Save the user configuration to the memory.
Step 506: Check if the MAC address specified by the user exists in the MAC-IPv6 address table 30. If yes, go to Step 508; otherwise, go to Step 510.
Step 508: Add IPv6 addresses corresponding to the MAC address to a filtering rule.
Step 510: End.

In brief, when a user utilizes the human-machine interface 202 to add a user configuration for the filtering rule according to the MAC address, the device 20 may save the user configuration, look up the IPv6 address in the MAC-IPv6 address table 30 to check if the MAC address exists in the table, and then establish the filtering rule.

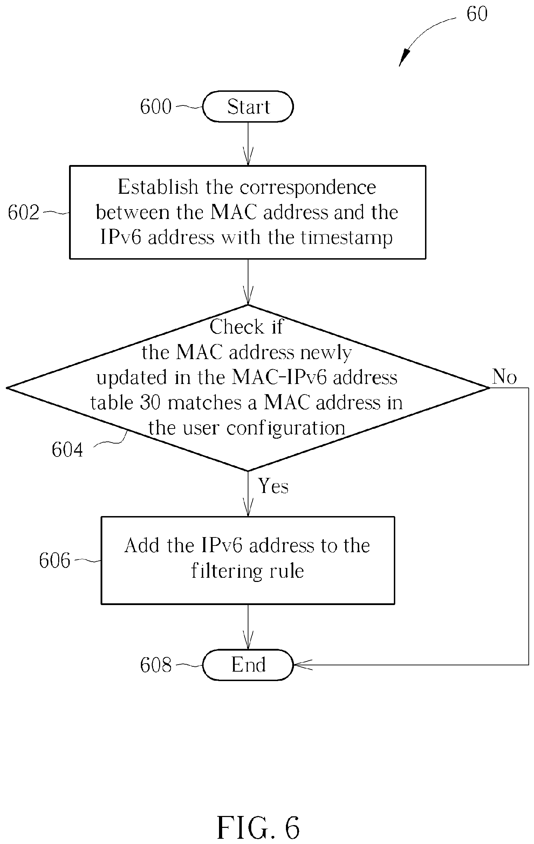

FIG. 6 is a flowchart of a process 60 according to an embodiment of the present invention. The process 60 may be utilized in the gateway 100 of the communication system 10 for updating the filtering rule after the gateway 100 updates the MAC-IPv6 address table 30. The process 60 may also be implemented by the packet monitoring module 200 of the device 20 and compiled into a program code for executing the following steps:
Step 600: Start.
Step 602: Establish the correspondence between the MAC address and the IPv6 address with the timestamp.
Step 604: Check if the MAC address newly updated in the MAC-IPv6 address table 30 matches a MAC address in the user configuration. If yes, go to Step 606; otherwise, go to Step 608.
Step 606: Add the IPv6 address to the filtering rule.
Step 608: End.

In short, when the packet monitoring module 200 establishes a new correspondence between the MAC address and an IPv6 address, the IPv6 address may be added to the filtering rule if the MAC address newly updated in the MAC-IPv6 address table 30 matches a MAC address in the user configuration.

The abovementioned steps of the processes 40, 50, 60 including suggested steps which may be realized by means of hardware, software, firmware, or an electronic system. Examples of hardware include analog, digital and mixed circuits known as microcircuit, microchip, or silicon chip. Examples of the electronic system include a system on chip (SOC), system in package (SiP), a computer on module (COM), and the device 20. The device 20 may include a processing means such as a microprocessor or an Application Specific Integrated Circuit (ASIC) and a storage unit that can store a program code, accessed by the processing means to execute the abovementioned steps. Examples of the storage unit include read-only memory (ROM), flash memory, random-access memory (RAM), CD-ROM/DVD-ROM, magnetic tape, hard disk, and optical data storage device. The communication interface is preferably a wired/wireless transceiver that can transmit and receive signals (e.g., messages or packets) according to processing results of the processing means.

In the prior art, an IPv6 address of a host in LAN is configured by manual setup or stateful/stateless address auto-configuration from an IPv6 delegated prefix which may be assigned by DHCPv6 server, and therefore a single host may be associated with more than one IPv6 address and the IPv6 address is not fixed, which causes a problem when configuring the filtering rule of the gateway. In contrast, the present invention allows a gateway filtering IPv6 packets according to NS and NA messages of ICMPv6, so as to efficiently and effectively set up the filtering rule based on a MAC address and ensure the network security.

## Claims

1. A device (20) having an Internet Protocol version 6, IPv6, firewall functionality, **characterized by** comprising:
a packet monitoring module (200) for inspecting a packet of Internet Control Message Protocol version 6, ICMPv6, type from a network to obtain a Media Access Control, MAC, address and an IPv6 address of a host from the packet of ICMPv6 type, and updating the MAC address and the IPv6 address of the host in a MAC-IPv6 address table (30);
a human machine interface (202) for storing a user configuration for MAC address-based filtering rule setting and updating a filtering rule according to the user configuration and the MAC-IPv6 address table (30); and
a packet filtering module (204) for filtering packets transmitting from the network according to the filtering rule;
wherein the packet is a Neighbor Solicitation, NS, message or a Neighbor Advertisement, NA, message.

2. The device (20) of claim 1, **characterized in that** the packet monitoring module (200) updates the MAC address and the IPv6 address of the packet in the MAC-IPv6 address table (30) according to an Internet Control Message Protocol version 6, ICMPv6, packet type and functionality of the packet.

3. The device (20) of claim 2, **characterized in that** the packet monitoring module (200) stores the MAC address and the IPv6 address of the packet in the MAC-IPv6 address table (30) if the packet is an NS message for Duplicate Address Detection, DAD, or if the packet is an NA message and the IPv6 address is not in the MAC-IPv6 address table (30).

4. The device (20) of claim 2, **characterized in that** if the packet is an NA message and the IPv6 address is in the MAC-IPv6 address table (30) while the MAC address corresponding to the IPv6 address in the MAC-IPv6 address table (30) is not consistent with an ICMPv6 Option of the packet, the packet monitoring module (200) deletes the MAC address corresponding to the IPv6 address in the MAC-IPv6 address table (30).

5. The device (20) of claim 1, **characterized in that** the packet monitoring module (200) updates the MAC address and the IPv6 address of the packet in the MAC-IPv6 address table (30) with a timestamp.

6. The device (20) of claim 1, **characterized in that** if a MAC address of the user configuration is in the MAC-IPv6 address table (30), the human machine interface (202) adds IPv6 addresses corresponding to the MAC address in the MAC-IPv6 address table (30) to the filtering rule.

7. The device (20) of claim 1, **characterized in that** after updating the MAC address and the IPv6 address to the MAC-IPv6 address table (30), the packet monitoring module (200) adds the IPv6 address to the filtering rule if the MAC address matches the user configuration.

8. A method for a system having an Internet Protocol version 6, IPv6, firewall functionality to filter network packets based on Media Access Control, MAC, addresses comprising the steps of:
inspecting a packet of Internet Control Message Protocol version 6, ICMPv6, type from a network to obtain a Media Access Control, MAC, address and an IPv6 address of a host from the packet of ICMPv6 type, and updating the MAC address and the IPv6 address of the host in a MAC-IPv6 address table (30);
storing a user configuration for MAC address-based filtering rule setting and updating a filtering rule according to the user configuration and the MAC-IPv6 address table (30); and filtering packets transmitting from the network according to the filtering rule;
wherein the packet is a Neighbor Solicitation, NS, message or a Neighbor Advertisement, NA, message.

9. The method of claim 8, **characterized in that** the step of inspecting a packet from a network and updating the MAC address and the IPv6 address of the packet in the MAC-IPv6 address table (30) comprises the step of:
updating the MAC address and the IPv6 address of the packet in the MAC-IPv6 address table (30) according to an Internet Control Message Protocol version 6, ICMPv6, packet type and functionality of the packet.

10. The method of claim 9, **characterized in that** the step of inspecting a packet from a network and updating the MAC address and the IPv6 address of the packet in the MAC-IPv6 address table (30) further comprises the step of:
storing the MAC address and the IPv6 address of the packet in the MAC-IPv6 address table (30) if the packet is an NS message for Duplicate Address Detection, DAD; or
storing the MAC address and the IPv6 address of the packet in the MAC-IPv6 address table (30) if the packet is an NA message and the IPv6 address is not in the MAC-IPv6 address table (30).

11. The method of claim 9, **characterized in that** the step of inspecting a packet from a network and updating the MAC address and the IPv6 address of the packet in the MAC-IPv6 address table (30) comprises the step of:
deleting the MAC address corresponding to the IPv6 address in the MAC-IPv6 address table (30) if the packet is an NA message and the IPv6 address is in the MAC-IPv6 address table (30) while the MAC address corresponding to the IPv6 address in the MAC-IPv6 address table (30) is not consistent with an ICMPv6 Option of the packet.

12. The method of claim 8, **characterized in that** the step of inspecting a packet from a network and updating the MAC address and the IPv6 address of the packet in the MAC-IPv6 address table (30) comprises the step of:
updating the MAC address and the IPv6 address of the packet in the MAC-IPv6 address table (30) with a timestamp.

13. The method of claim 8, **characterized in that** the MAC-IPv6 address table (30) uses a MAC address as an index.

14. The method of claim 8, **characterized in that** the step of storing a user configuration and updating a filtering rule according to the user configuration and the MAC-IPv6 address table (30) comprises the step of:
adding IPv6 addresses corresponding to the MAC address in the MAC-IPv6 address table (30) to the filtering rule if a MAC address of the user configuration is in the MAC-IPv6 address table (30).

15. The method of claim 8, **characterized in that** the step of updating the MAC address and the IPv6 address of the packet in the MAC-IPv6 address table (30) comprises the step of:
adding the IPv6 address to the filtering rule if the MAC address matches the user configuration after updating the MAC address and the IPv6 address to the MAC-IPv6 address table (30).

## Patentansprüche

1. Gerät (20) mit einer Internet-Protokoll Version 6, IPv6, Firewall-Funktionalität, **gekennzeichnet dadurch, dass** es umfasst:
ein Paket-Überwachungsmodul (200) zum Prüfen eines Pakets vom Internet Control Nachrichten-Protokoll Version 6, ICMPv6, Typ von einem Netzwerk, um eine Media Access Control, MAC-Adresse und eine IPv6-Addresse eines Hosts aus dem Paket vom ICMPv6-Typ zu erhalten, und Aktualisieren der MAC-Adresse und der IPv6-Addresse des Hosts in einer MAC-IPv6-Addresstabelle (30);
ein Mensch-Maschine-Interface (202) zum Speichern einer User-Konfiguration für eine MAC-Adresse-basierte Filterregel-Einstellung und Aktualisieren einer Filterregel gemäß der User-Konfiguration und der MAC-IPv6-Addresstabelle (30); und
ein Paket-Filtermodul (204) zum Filtern von Paketen, die vom Netzwerk gemäß der Filterregel übertragen werden;
worin das Paket eine Nachbar-Aufforderungs-, NS, -Nachricht oder eine Nachbar-Advertisement-, NA, -Nachricht ist

2. Gerät (20) nach Anspruch 1, **dadurch gekennzeichnet, dass** das Paket-Überwachungsmodul (200) die MAC-Adresse und die IPv6-Addresse des Pakets in der MAC-IPv6-Addresstabelle (30) gemäß einem Internet Control Nachrichten-Protokoll Version 6, ICMPv6, Paket-Typ und der Funktionalität des Pakets aktualisiert.

3. Gerät (20) nach Anspruch 2, **dadurch gekennzeichnet, dass** das Paket-Überwachungsmodul (200) die MAC-Adresse und die IPv6-Addresse des Pakets in der MAC-IPv6-Addresstabelle (30) speichert, wenn das Paket eine NS-Nachricht für Duplicate Address Detection, DAD, ist oder wenn das Paket eine NA-Nachricht ist und die IPv6-Addresse nicht in der MAC-IPv6-Addresstabelle (30) ist.

4. Gerät (20) nach Anspruch 2, **dadurch gekennzeichnet, dass** wenn das Paket eine NA-Nachricht ist und die IPv6-Addresse in der MAC-IPv6-Addresstabelle (30) ist, während die MAC-Adresse entsprechend der IPv6-Addresse in der MAC-IPv6-Addresstabelle (30) nicht mit einer ICMPv6-Option des Pakets übereinstimmt, das Paket-Überwachungsmodul (200) die MAC-Adresse entsprechend der IPv6-Addresse in der MAC-IPv6-Addresstabelle (30) löscht.

5. Gerät (20) nach Anspruch 1, **dadurch gekennzeichnet, dass** das Paket-Überwachungsmodul (200) die MAC-Adresse und die IPv6-Addresse des Pakets in der MAC-IPv6-Addresstabelle (30) mit einer Zeitangabe aktualisiert.

6. Gerät (20) nach Anspruch 1, **dadurch gekennzeichnet, dass** wenn in der MAC-IPv6-Addresstabelle (30) eine MAC-Adresse der User-Konfiguration vorliegt, das Mensch-Maschine-Interface (202) zu der Filterregel IPv6-Adressen entsprechend der MAC-Adresse in der MAC-IPv6-Addresstabelle (30) hinzufügt.

7. Gerät (20) nach Anspruch 1, **dadurch gekennzeichnet, dass** nach Aktualisieren der MAC-Adresse und der IPv6-Addresse in der MAC-IPv6-Addresstabelle (30), das Paket-Überwachungsmodul (200) die IPv6-Addresse zu der Filterregel hinzufügt, wenn die MAC-Adresse zu der User-Konfiguration passt.

8. Verfahren für ein System mit Internet-Protokoll Version 6, IPv6, Firewall-Funktionalität, um Netzwerk-Pakete basierend auf Media Access Control, MAC-Adressen zu filtern, welches die Schritte umfasst:
Prüfen eines Paket vom Internet Control Nachrichten-Protokoll Version 6, ICMPv6, Typ von einem Netzwerk, um eine Media Access Control, MAC-Adresse und eine IPv6-Addresse von einem Host aus dem Paket vom ICMPv6-Typ zu erhalten, und Aktualisieren die MAC-Adresse und der IPv6-Addresse des Hosts in einer MAC-IPv6-Addresstabelle (30);
Speichern einer User-Konfiguration für MAC-Adressen basiertes Filterregel-Einstellen und Aktualisieren einer Filterregel gemäß der User-Konfiguration und der MAC-IPv6-Addresstabelle (30); und
Filtern von Paketen, die vom Netzwerk gemäß der Filterregel übertragen werden;
worin das Paket eine Nachbar-Aufforderungs-, NS, -Nachricht oder eine Neighbor Advertisement, NA, -Nachricht ist.

9. Verfahren nach Anspruch 8, **dadurch gekennzeichnet, dass** der Schritt des Prüfens eines Paket von einem Netzwerk und Aktualisieren der MAC-Adresse und der IPv6-Addresse des Pakets in der MAC-IPv6-Addresstabelle (30) den Schritt umfasst:
Aktualisieren der MAC-Adresse und der IPv6-Addresse des Pakets in der MAC-IPv6-Addresstabelle (30) gemäß einem Internet Control Nachrichten-Protokoll Version 6, ICMPv6, Paket-Typ und der Funktionalität des Pakets.

10. Verfahren nach Anspruch 9, **dadurch gekennzeichnet, dass** der Schritt des Prüfens eines Paket von einem Netzwerk und Aktualisieren der MAC-Adresse und der IPv6-Addresse des Pakets in der MAC-IPv6-Addresstabelle (30) weiter den Schritt umfasst:
Speichern der MAC-Adresse und der IPv6-Addresse des Pakets in der MAC-IPv6-Addresstabelle (30) wenn das Paket eine NS-Nachricht für Duplicate Address Detection, DAD ist; oder
Speichern der MAC-Adresse und der IPv6-Addresse des Pakets in der MAC-IPv6-Addresstabelle (30) wenn das Paket eine NA-Nachricht ist und die IPv6-Addresse nicht in der MAC-IPv6-Addresstabelle (30) ist.

11. Verfahren nach Anspruch 9, **dadurch gekennzeichnet, dass** der Schritt des Prüfens eines Pakets von einem Netzwerk und Aktualisieren der MAC-Adresse und der IPv6-Addresse des Pakets in der MAC-IPv6-Addresstabelle (30) den Schritt umfasst:
Entfernen der MAC-Adresse entsprechend der IPv6-Adresse in der MAC-IPv6-Addresstabelle (30), wenn das Paket eine NA-Nachricht ist und die IPv6-Addresse in der MAC-IPv6-Addresstabelle (30) ist, während die MAC-Adresse, die der IPv6-Addresse in der MAC-IPv6-Addresstabelle (30) entspricht, nicht mit einer ICMPv6-Option des Pakets übereinstimmt.

12. Verfahren nach Anspruch 8, **dadurch gekennzeichnet, dass** der Schritt des Prüfens eines Paket von einem Netzwerk und Aktualisieren der MAC-Adresse und der IPv6-Addresse des Pakets in der MAC-IPv6-Addresstabelle (30) den Schritt umfasst:
Aktualisieren der MAC-Adresse und der IPv6-Addresse des Pakets in der MAC-IPv6-Addresstabelle (30) mit einer Zeitangabe.

13. Verfahren nach Anspruch 8, **dadurch gekennzeichnet, dass** die MAC-IPv6-Addresstabelle (30) eine MAC-Adresse als einen Index verwendet.

14. Verfahren nach Anspruch 8, **dadurch gekennzeichnet, dass** der Schritt des Speicherns einer User-Konfiguration und Aktualisieren einer Filterregel gemäß der User-Konfiguration und der MAC-IPv6-Addresstabelle (30) den Schritt umfasst:
Zufügen von IPv6-Adressen entsprechend der MAC-Adresse in der MAC-IPv6-Addresstabelle (30) zu der Filterregel, wenn eine MAC-Adresse der User-Konfiguration in der MAC-IPv6-Addresstabelle (30) ist.

15. Verfahren nach Anspruch 8, **dadurch gekennzeichnet, dass** der Schritt des Aktualisierens der MAC-Adresse und der IPv6-Addresse des Pakets in der MAC-IPv6-Addresstabelle (30) den Schritt umfasst:
Zufügen der IPv6-Adresse zu der Filterregel, wenn die MAC-Adresse zu der User-Konfiguration passt nach Aktualisieren der MAC-Adresse und der IPv6-Addresse in der MAC-IPv6-Addresstabelle (30).

## Revendications

1. Dispositif (20) possédant une fonctionnalité de pare-feu Protocole Internet version 6, IPv6, **caractérisé en ce qu'**il comprend :
un module de surveillance de paquet (200) pour inspecter un paquet de type Protocole de message de contrôle Internet version 6, ICMPv6, provenant d'un réseau de façon à obtenir une adresse de Contrôle d'accès au support, MAC, et une adresse IPv6 d'un hôte à partir du paquet de type ICMPv6, et mettre à jour l'adresse MAC et l'adresse IPv6 de l'hôte dans une table d'adresses MAC-IPv6 (30) ;
une interface humain-machine (202) pour stocker une configuration utilisateur pour une règle de filtrage basée sur l'adresse MAC définissant et mettant à jour une règle de filtrage selon la configuration utilisateur et la table d'adresses MAC-IPv6 (30) ; et un module de filtrage de paquets (204) pour filtrer les paquets se transmettant à partir du réseau selon la règle de filtrage ;
dans lequel le paquet est un message de Sollicitation de voisin, NS, ou un message d'Annonce de voisin, NA.

2. Dispositif (20) selon la revendication 1, **caractérisé en ce que** le module de surveillance de paquet (200) met à jour l'adresse MAC et l'adresse IPv6 du paquet dans la table d'adresses MAC-IPv6 (30) selon le type et la fonctionnalité de paquet de Protocole de message de contrôle Internet version 6, ICMPv6, du paquet.

3. Dispositif (20) selon la revendication 2, **caractérisé en ce que** le module de surveillance de paquet (200) stocke l'adresse MAC et l'adresse IPv6 du paquet dans la table d'adresses MAC-IPv6 (30) si le paquet est un message NS pour une détection d'adresse dupliquée, DAD, ou si le paquet est un message NA et que l'adresse IPv6 n'est pas dans la table d'adresses MAC-IPv6 (30).

4. Dispositif (20) selon la revendication 2, **caractérisé en ce que**, si le paquet est un message NA et que l'adresse IPv6 se trouve dans la table d'adresses MAC-IPv6 (30) alors que l'adresse MAC correspondant à l'adresse IPv6 dans la table d'adresses MAC-IPv6 (30) n'est pas cohérente avec l'option ICMPv6 du paquet, le module de surveillance de paquet (200) supprime l'adresse MAC correspondant à l'adresse IPv6 dans la table d'adresses MAC-IPv6 (30).

5. Dispositif (20) selon la revendication 1, **caractérisé en ce que** le module de surveillance de paquet (200) met à jour l'adresse MAC et l'adresse IPv66 du paquet dans la table d'adresses MAC-IPv6 (30) avec un horodatage.

6. Dispositif (20) selon la revendication 1, **caractérisé en ce que**, si une adresse MAC de la configuration utilisateur se trouve dans la table d'adresses MAC-IPv6 (30), l'interface humain-machine (202) ajoute les adresses IPv6 correspondant à l'adresse MAC dans la table d'adresses MAC-IPv6 (30) à la règle de filtrage.

7. Dispositif (20) selon la revendication 1, **caractérisé en ce que**, après la mise à jour de l'adresse MAC et de l'adresse IPv6 dans la table d'adresses MAC-IPv6 (30), le module de surveillance de paquet (200) ajoute l'adresse IPv6 à la règle de filtrage si l'adresse MAC correspond à la configuration utilisateur.

8. Procédé destiné à un système possédant une fonctionnalité de pare-feu Protocole Internet version 6, IPv6, pour filtrer des paquets de réseau sur la base d'adresses de Contrôle d'accès au support, MAC, comprenant les étapes consistant à :
inspecter un paquet de type Protocole de message de contrôle Internet version 6, ICMPv6, provenant d'un réseau pour obtenir une adresse de Contrôle d'accès au support, MAC, et
une adresse IPv6 d'un hôte à partir du paquet de type ICMPv6, et mettre à jour l'adresse MAC et l'adresse IPv6 de l'hôte dans une table d'adresses MAC-IPv6 (30) ;
stocker une configuration utilisateur pour une règle de filtrage basée sur l'adresse MAC définissant et mettant à jour une règle de filtrage selon la configuration utilisateur et la table d'adresses MAC-IPv6 (30) ; et
filtrer les paquets se transmettant à partir du réseau selon la règle de filtrage ;
dans lequel le paquet est un message de Sollicitation de voisin, NS, ou un message d'Annonce de voisin, NA.

9. Procédé selon la revendication 8, **caractérisé en ce que** l'étape d'inspection d'un paquet provenant d'un réseau et de mise à jour de l'adresse MAC et de l'adresse IPv6 du paquet dans la table d'adresses MAC-IPv6 (30) comprend l'étape consistant à :
mettre à jour l'adresse MAC et l'adresse IPv6 du paquet dans la table d'adresses MAC-IPv6 (30) selon un type et une fonctionnalité de paquet de Protocole de message de contrôle Internet version 6, ICMPv6, du paquet.

10. Procédé selon la revendication 9, **caractérisé en ce que** l'étape d'inspection d'un paquet provenant d'un réseau et de mise à jour de l'adresse MAC et de l'adresse IPv6 du paquet dans la table d'adresses MAC-IPv6 (30) comprend en outre l'étape consistant à :
stocker l'adresse MAC et l'adresse IPv6 du paquet dans la table d'adresses MAC-IPv6 (30) si le paquet est un message NS pour une détection d'adresse dupliquée, DAD ; ou
stocker l'adresse MAC et l'adresse IPv6 du paquet dans la table d'adresses MAC-IPv6 (30) si le paquet est un message NA et que l'adresse IPv6 n'est pas dans la table d'adresses MAC-IPv6 (30).

11. Procédé selon la revendication 9, **caractérisé en ce que** l'étape d'inspection d'un paquet provenant d'un réseau et de mise à jour de l'adresse MAC et de l'adresse IPv6 du paquet dans la table d'adresses MAC-IPv6 (30) comprend l'étape consistant à :
supprimer l'adresse MAC correspondant à l'adresse IPv6 dans la table d'adresses MAC-IPv6 (30) si le paquet est un message NA et que l'adresse IPv6 se trouve dans la table d'adresses MAC-IPv6 (30) alors que l'adresse MAC correspondant à l'adresse IPv6 dans la table d'adresses MAC-IPv6 (30) n'est pas cohérente avec l'option ICMPv6 du paquet.

12. Procédé selon la revendication 8, **caractérisé en ce que** l'étape d'inspection d'un paquet provenant d'un réseau et de mise à jour de l'adresse MAC et de l'adresse IPv6 du paquet dans la table d'adresses MAC-IPv6 (30) comprend l'étape consistant à :
mettre à jour l'adresse MAC et l'adresse IPv6 du paquet dans la table d'adresses MAC-IPv6 (30) avec un horodatage.

13. Procédé selon la revendication 8, **caractérisé en ce que** la table d'adresses MAC-IPv6 (30) utilise une adresse MAC en tant qu'index.

14. Procédé selon la revendication 8, **caractérisé en ce que** l'étape de stockage d'une configuration utilisateur et de mise à jour d'une règle de filtrage selon la configuration utilisateur et la table d'adresses MAC-IPv6 (30) comprend l'étape consistant à :
ajouter des adresses IPv6 correspondant à l'adresse MAC dans la table d'adresses MAC-IPv6 (30) à la règle de filtrage si une adresse MAC de la configuration utilisateur se trouve dans la table d'adresses MAC-IPv6 (30).

15. Procédé selon la revendication 8, **caractérisé en ce que** l'étape de mise à jour de l'adresse MAC et de l'adresse IPv6 du paquet dans la table d'adresses MAC-IPv6 (30) comprend l'étape consistant à :
ajouter l'adresse IPv6 à la règle de filtrage si l'adresse MAC correspond à la configuration utilisateur après la mise à jour de l'adresse MAC et de l'adresse IPv6 dans la table d'adresses MAC-IPv6 (30).
